# EUROPEAN PATENT APPLICATION

(11) **EP 3 115 891 A1**
(43) Date of publication of application: **11.01.2017**
(21) Application number: 15188837.7
(22) Date of filing: 07.10.2015
(51) Int. Cl.: G06F 9/45

(54) **DYNAMIC OPTIMIZATION OF BYTECODES**

(30) Priority: 09.07.2015 IN 3522CH2015
(71) Applicant: Sycom Corporation Pvt. Ltd., 600 009 Chennai (IN)
(72) Inventor: JAIN, Pulkit, 201014 Ghaziabad (IN)
(74) Representative: Sadler, Peter Frederick

(57) **Abstract**

A method is provided for dynamic optimisation of bytecodes. The method comprises the steps of identifying at least one repetitive pattern in the bytecode; assigning a unique proprietary opcode for each identified repetitive pattern; creating metadata defining execution of each proprietary opcode; storing said metadata for use during execution of said bytecode; and optimising said bytecode for replacing each identified repetitive pattern with the corresponding defined proprietary opcode. A corresponding device, computer implemented system and computer program are also provided.

## Description

### Field of Disclosure

The field of the present disclosure pertains to a method for dynamic optimization of bytecodes and a device and computer implemented system thereof, and particularly, to bytecode optimization framework for interpreted languages.

### Background

A bytecode is a computer object code processed by a virtual machine, which converts generalized machine instructions to specific machine instructions. A bytecode is realized as a compiled source code written in a language that supports the approach of bytecodes and virtual machines.

In Java, bytecodes are stored in Java class files, which are then executed by an interpreter. The key concern in such a set-up is efficient execution owing to which several bytecode optimization techniques have emerged. However, these techniques are basically static due to which interpreters need to be modified or changed altogether. The static nature of these techniques have several disadvantages such as future application/program bytecodes are not optimized as the defined opcode patterns do not occur frequently in the bytecode. Therefore, optimization is not realized at all in the present techniques. Every time a new opcode pattern is defined, a corresponding adaptation of the same has to be made available in the compiler and the interpreter. Additionally, the size of bytecode representation hampers faster execution and therefore, speed becomes a concern.

### Summary

In order to avoid static nature of conventional techniques, embodiments of the present disclosure provide a method for dynamic optimization of bytecodes and a device and a computer implemented system thereof.

An embodiment of the present disclosure refers to a method for dynamic optimization of bytecodes comprising the steps of identifying at least one repetitive pattern in the bytecode, assigning a unique proprietary opcode for each identified repetitive pattern, creating metadata defining execution of each proprietary opcode, storing said metadata for successful interpretation of defined proprietary opcode and optimizing said bytecode by replacing each identified repetitive pattern with the corresponding defined proprietary opcode.

A further embodiment of the present disclosure refers to a method of executing bytecode dynamically optimized in accordance with the primary embodiment of the disclosure. The method retrieves stored metadata corresponding to each proprietary opcode and executes the bytecode replaced by the proprietary opcode using the corresponding metadata.

An embodiment of the disclosure illustrates a device performing dynamic optimization of bytecodes, comprising one or more identification modules for identifying repetitive patterns in the bytecode, one or more assignment modules for assigning a unique proprietary opcode for each identified repetitive pattern and replacing said repetitive pattern with said proprietary opcode, one or more metadata creation modules for creating metadata necessary for defining execution of each proprietary opcode and one or more storage modules for storing said metadata for use during execution of said bytecode.

A further embodiment of the present disclosure refers to a computer implemented system for dynamic optimization of bytecodes comprising a processor configured to identify at least one repetitive pattern in the bytecode, define a proprietary opcode for each identified repetitive pattern, create metadata for executing each proprietary opcode, optimize said bytecode by replacing each identified repetitive pattern with the defined proprietary opcode and a memory coupled to the processor to store determined metadata. In an exemplary embodiment of the disclosure, the processor is configured to utilize the metadata during execution of the bytecode.

According to an exemplary embodiment of the disclosure, data structure of the metadata is defined, which comprises necessary information to successfully interpret the proprietary opcode. In another exemplary embodiment of the disclosure, the structure of metadata comprises the proprietary opcode, proprietary opcode length, operands and standard opcodes-operands offset pairs.

Embodiments of the present disclosure provide an optimization technique where bytecode with optimum size is generated for an efficient execution using standard opcodes. Implementation of embodiments of the present disclosure requires a single instance of adaptation instead of a continuous adaptation required in state of the art.

### Brief Description of Drawings

The detailed description is described with reference to the accompanying figures. In the figures, the left-most digit(s) of a reference number identifies the figure in which the reference number first appears. The same numbers are used throughout the drawings to reference like features and components.
- **Figure 1**: illustrates a flow diagram representation of a method for dynamic optimization of bytecodes according to an embodiment of the present disclosure.
- **Figure 2**: illustrates a flow diagram representation of a method for execution of dynamically optimized bytecodes according to an embodiment of the present disclosure.
- **Figure 3**: illustrates coding of operands field in data structure of metadata according to an exemplary embodiment of the present disclosure
- **Figure 4**: illustrates a block diagrammatic representation of a device for dynamic optimization of bytecodes according to an embodiment of the present disclosure.
- **Figure 5**: illustrates a block diagrammatic representation of a computer implemented system for dynamic optimization of bytecodes according to an embodiment of the present disclosure.
- **Figure 6**: illustrates a block diagrammatic representation of dynamic optimization of bytecodes according to an embodiment of the present disclosure.

### Detailed Description

The following discussion provides a brief, general description of a suitable computing environment in which various embodiments of the present disclosure can be implemented. The aspects and embodiments are described in the general context of computer executable mechanisms such as routines executed by a handheld device e.g. a mobile phone, a personalized digital assistant, a cellular device, a tablet et al. The embodiments described herein can be practiced with other system configurations, including Internet appliances, hand held devices, multi-processor systems, microprocessor based or programmable consumer electronics, network PCs, mini computers, mainframe computers and the like. The embodiments can be embodied in a special purpose computer or data processor that is specifically programmed configured or constructed to perform one or more of the computer executable mechanisms explained in detail below.

Exemplary embodiments now will be described with reference to the accompanying drawings. The disclosure may, however, be embodied in many different forms and should not be construed as limited to the embodiments set forth herein; rather, these embodiments are provided so that this disclosure will be thorough and complete, and will fully convey its scope to those skilled in the art. The terminology used in the detailed description of the particular exemplary embodiments illustrated in the accompanying drawings is not intended to be limiting. In the drawings, like numbers refer to like elements.

The specification may refer to "an", "one" or "some" embodiment(s) in several locations. This does not necessarily imply that each such reference is to the same embodiment(s), or that the feature only applies to a single embodiment. Single features of different embodiments may also be combined to provide other embodiments.

As used herein, the singular forms "a", "an" and "the" are intended to include the plural forms as well, unless expressly stated otherwise. It will be further understood that the terms "includes", "comprises", "including" and/or "comprising" when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations and arrangements of one or more of the associated listed items.

Unless otherwise defined, all terms (including technical and scientific terms) used herein have the same meaning as commonly understood by one of ordinary skill in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The figures depict a simplified structure only showing some elements and functional entities, all being logical units whose implementation may differ from what is shown. The connections shown are logical connections; the actual physical connections may be different. It is apparent to a person skilled in the art that the structure may also comprise other functions and structures. It should be appreciated that the functions, structures, elements and the protocols used in communication are irrelevant to the present disclosure. Therefore, they need not be discussed in more detail here.

In addition, all logical units described and depicted in the figures include the software and/or hardware components required for the unit to function. Further, each unit may comprise within itself one or more components, which are implicitly understood. These components may be operatively coupled to each other and be configured to communicate with each other to perform the function of the said unit.

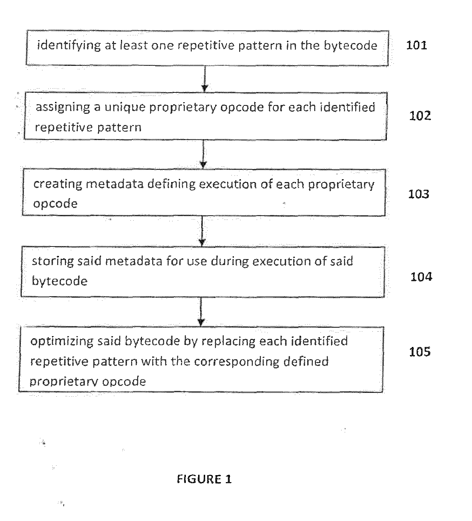

**Figure 1** of the present application refers to a flow diagram representation of a method for dynamic optimization of bytecodes according to an embodiment of the present disclosure. As per the method, at least one repetitive pattern is identified in the bytecode **101.** Each identified repetitive pattern is then assigned **102** a unique proprietary opcode and metadata pertaining to each proprietary opcode is created **103.** The created metadata is stored **104** for successful interpretation of the proprietary opcodes during execution. The respective bytecodes are optimized **105** by replacing each identified repetitive pattern with the corresponding defined proprietary opcode.

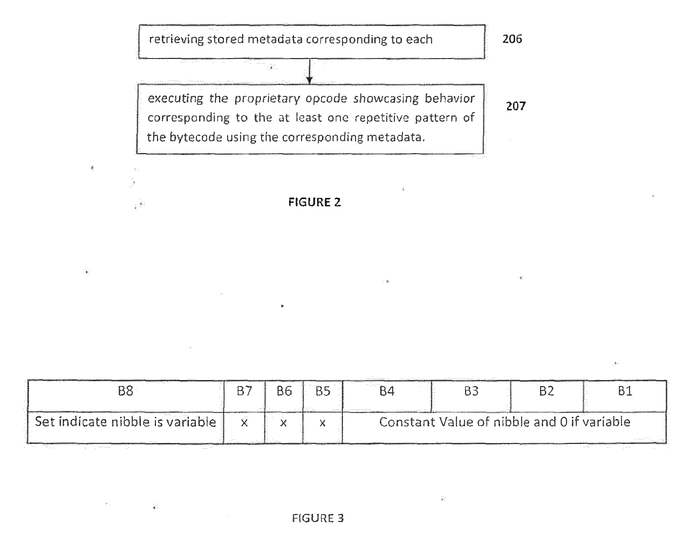

**Figure 2** of the disclosure refers to a flow diagram representation of a method for execution of dynamically optimized bytecodes according to an embodiment of the present disclosure. As per the embodiment, stored metadata corresponding to each proprietary opcode is retrieved **206** and utilized to execute **207** the proprietary opcode showcasing the behavior corresponding to the original bytecode i.e. the repetitive pattern of the bytecode.

Several embodiments of the present disclosure treat nibble as the smallest unit for optimization and hence, sequences with similar nibble value in opcode operands are considered to identify repetitive patterns. Exemplary embodiments refer to three types of bytecode patterns - Pattern in a single opcode [PSO], Order of Multiple Opcodes [OMO] and Order and pattern in multiple opcodes [OPMO].

PSO refers to a type of bytecode pattern where an opcode having operand/operands may have a same value of all operands or some operands or having same operand nibble value appearing frequently in the bytecode. OMO refers to a type of bytecode patterns where multiple opcodes are in the same order which appear frequently in the bytecode. OPMO is a combination of PSO and OMO where multiple operands having same order and having same operands value appear frequently in the bytecode.

Owing to categorization of bytecode patterns, a certain level of abstraction is obtained and thereby, only two tasks have to be performed for the interpreted language. The two tasks being analysis of the bytecode patterns and storing corresponding metadata created in application/program specific location; and analyzing the proprietary opcode, corresponding operands and metadata to execute the proprietary opcode showcasing the behavior corresponding to the original bytecode i.e. the repetitive pattern of the bytecode. The requirement of only two tasks simplifies the process and therefore, faster execution is attained.

A crucial part of embodiments of the present disclosure is the metadata, which is created and stored for each proprietary opcode. Metadata is created by defining a data structure, which includes all information necessary to successfully interpret the proprietary opcode. According to an embodiment of the present disclosure, the metadata comprises the proprietary opcode and the bytecode pattern associated with said proprietary opcode.

In an exemplary instance of an embodiment of the present disclosure, there is a bytecode pattern defined as below: -

| **Bytecode Pattern** | | **Proprietary Opcode** |
|---|---|---|
| 0x60,0x0W, | //ifeq | 0xAB, 0xWX, 0xYZ |
| 0x11,0x6X,0x80, | //sspush | |
| 0x8d,0x12,0xYZ, | //invokestat | |
| 0x1a, | //aload_2 | |

In the above bytecode pattern, there are some variable nibbles (W, X, Y, Z), which will be different for all the instances of the bytecode pattern, and other nibbles are repetitive for all instances of bytecode pattern. The repetitive nibbles are identified and replaced with proprietary opcodes besides maintaining the variable nibbles. Metadata is created and stored for these proprietary opcode based on an exemplary data structure below: -

| **Field** | **Values in exemplary embodiment** |
|---|---|
| Proprietary Opcode | 0xAB |
| Proprietary Opcode Length | 0x03 |
| Operands | 0x00,0x80, 0x06,0x80,0x08,0x00, 0x01,0x02,0x80,0x80 |
| Standard Opcodes-Operands | 0x60,SO1,DO1, |
| Offset pairs | 0x11,SO2,DO2, 0x8d,SO3,DO3, 0x1a,SO4,DO4 |

During execution, when a proprietary opcode is encountered, the relevant metadata is retrieved and utilized to execute the opcode with similar effect as a bytecode.

Proprietary opcode contains value of the opcode corresponding to the repetitive bytecode pattern. In the exemplary embodiment, the value of the proprietary opcode has to be decided by the compiler implementation. In the current instance, the value of the proprietary opcode is "0xAB".

Proprietary Opcode Length contains the length of the proprietary opcode and the operands corresponding to proprietary opcode, which will be a part of the bytecode. In the current instance, the value of proprietary opcode length is "0x03". There are two bytes of operands with proprietary opcodes.

Operands field contains operands of all standard opcodes, which have operands , in the bytecode pattern. The operands are arranged sequentially taking nibble as the smallest unit. In real world implementation, coding of this field of the data structure is different from coding of the standard operand coding and is utilized by the interpreter to execute the proprietary opcode showcasing the behavior of the standard opcodes in the current instance of the exemplary embodiment. IN operands field, each nibble of standard opcode operands byte is coded on byte, such that if one nibble is similar in all instances of the bytecode pattern, it may be removed easily and become a part of the metadata.

Figure 3 discloses coding of operands field in data structure of metadata according to an exemplary embodiment of the present disclosure. As per the figure, if the bit value of B8 is "0", the nibble value is constant and its value is that as mentioned in B4-B1. However, if the bit value of B8 is "1", the nibble value is variable and its value is in operands following the proprietary opcode in the bytecode. The offset of the value of nibble in the operands is equal to summation of dynamic offset in Standard Opcodes-Operands Offset pairs field and the number of variable nibble in the operands fields before this variable nibble, for that particular standard opcode. In the present instance, if it assumed that "DO3" is "0x02" then nibble "Z" of "0xYZ" would be the offset of "0x03" as nibble "Y" is the only variable nibble before nibble "Z" in that particular standard opcode. The offset referred to in embodiments of the present disclosure always refer to offset of nibble and not of a byte. The value of B7-B'5 is not used and all bits in B4-B1 have a value of "0" in the instance'bit value of B8 is "1".

Further, the field of Standard Opcodes-Operands Offset pairs contain pairs of standard opcodes and corresponding offset to "operands first nibble" in operand field and offset to "operands first variable nibble" in operands followed after proprietary opcode. In the current instance, the field value is "0x60,SO1,DO1,0x11,SO2,DO2,0x8D,SO3,DO3,0x1A,SO4,DO4". SO refers to offset to "operands first nibble" in operand field and DO refers to "operands first variable nibble" in operands followed after proprietary opcode. As per the exemplary embodiment, the coding of these offset values is dependent on the compiler and interpreter implementation for the interpreted language.

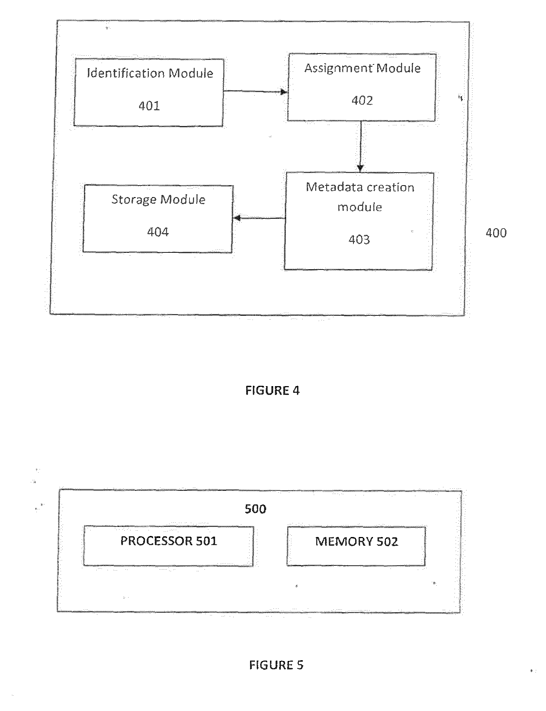

**Figure 4** illustrates a block diagrammatic representation of a device **400** for dynamic optimization of bytecodes according to an embodiment of the present disclosure. The device comprises an identification module **401,** an assignment module **402** coupled to the identification module **401,** metadata creation module 403 coupled to the assignment module **402** and a storage module **404** coupled to the metadata creation module **403.** The identification module **401** is configure to identify repetitive patterns in the bytecode while the assignment module **402** coupled to the identification module **401** assigns a unique proprietary opcode for each identified repetitive pattern and replacing said repetitive pattern with said proprietary opcode. The metadata creation module **403** then creates metadata necessary for defining execution of each proprietary opcode and this created metadata is stored in the storage module **404.**

According to another'embodiment of the present disclosure, plurality of modules are utilized in the device i.e. more than one identification module, more than one assignment module, more than one metadata creation module and more than one storage module.

Embodiments of the device create metadata using a data structure with necessary information to interpret the proprietary opcode effectively. An embodiment of the present disclosure illustrates a device for executing bytecodes, which are dynamically optimized by the device **400.** The device comprises one or more execution modules to execute each of the proprietary opcodes using the metadata.

Another embodiment of the present disclosure refers to a computer implemented system **500** for dynamic optimization of bytecodes. The system **500** comprises a processor **501** and a memory **502** coupled to the processor **501.** The processor is configured to identify repetitive pattern(s) in the bytecode, define a proprietary opcode for each identified repetitive pattern, create metadata for executing each proprietary opcode and optimize the bytecode by replacing each identified repetitive pattern with the defined proprietary opcode. The memory **502** is configured to store the determined metadata as implemented by the processor **501.**

Further, the metadata is structured to include said proprietary opcode and identified repetitive pattern of bytecode associated with the proprietary opcode. The processor 501 is configured to utilize this metadata to execute the bytecode upon encountering the proprietary opcode during said function.

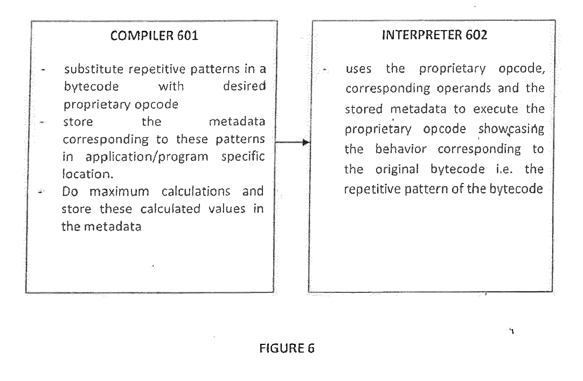

**Figure 6** of the present disclosure illustrates an exemplary embodiment of dynamic optimization of bytecodes. As per the exemplary embodiment, a compiler **601** is configured to substitute repetitive patterns in a bytecode with desired proprietary opcode and store the metadata corresponding to these patterns in application/program specific location. The compiler does maximum calculations and stores these calculated values in the metadata such that the runtime performance of the application/program does not degrade due to bytecode optimization. The embodiment also comprises an interpreter **602,** which uses the proprietary opcode, corresponding.operands and the stored metadata to execute the proprietary opcode showcasing the behavior corresponding to the original bytecode i.e. the repetitive pattern of the bytecode. Therefore, the actual interpreter logic corresponding to standard opcodes is transparent and all opcodes are executed in a standard manner thereby, making the technique efficient in terms of speed and overhead.

Another embodiment of the present application refers to a computer program product for dynamic optimization of bytecodes comprising means to identify repetitive patterns in the bytecode, means to assign a unique proprietary opcode for each identified repetitive pattern and replacing said repetitive pattern with said proprietary opcode, means to create metadata necessary for defining execution of each proprietary opcode and means to store said metadata for use during execution of said bytecode.

Further, the computer program product wherein each metadata creation module utilizes a structure including the proprietary opcode and its associated bytecode pattern. During execution, the proprietary opcodes showcase the behavior corresponding to the original bytecode using the corresponding metadata. The original bytecode is the repetitive pattern in the bytecode.

As will be appreciated by one of skill in the art, the present invention may be embodied as a method, system, or computer program product. Accordingly, the present invention may take the form of an entirely hardware embodiment, a software embodiment or an embodiment combining software and hardware aspects all generally referred to herein as a. "circuit" or "module." Furthermore, the present invention may take the form of a computer program product on a computer-usable storage medium having computer-usable program code embodied in the medium.

Furthermore, the present invention was described in part above with reference to flowchart illustrations and/or block diagrams of methods, apparatus (systems), and computer program products according to embodiments of the invention.

It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create'means for implementing the functions/acts specified in the flowchart and/or block diagram block or blocks.

Instructions may also be stored in a computer- readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

## Claims

1. A method for dynamic optimization of bytecodes, comprising the steps of:
- identifying at least one repetitive pattern in the bytecode;
- assigning a unique proprietary opcode for each identified repetitive pattern;
- creating metadata defining execution of each proprietary opcode;
- storing said metadata for use during execution of said bytecode; and
- optimizing said bytecode by replacing each identified repetitive pattern with the corresponding defined proprietary opcode.

2. The method as claimed in claim 1 wherein the step of creating metadata comprises the step of defining a data structure including said proprietary opcode and the bytecode pattern associated with said proprietary opcode.

3. A method of executing bytecode dynamically optimized in accordance with claim 1 or 2 comprising the steps of: -
- retrieving stored metadata corresponding to each proprietary opcode; and
- executing the proprietary opcode showcasing behavior corresponding to the repetitive pattern of the bytecode.

4. A device for performing dynamic optimization of bytecodes, comprising: -
- one or more identification modules for identifying repetitive patterns in the bytecode;
- one or more assignment modules for assigning a unique proprietary opcode for each identified repetitive pattern and replacing said repetitive pattern with said proprietary opcode;
- one or more metadata creation modules for creating metadata necessary for defining execution of each proprietary opcode; and
- one or more storage modules for storing said metadata for use during execution of said bytecode.

5. The device as claimed in claim 4 wherein each metadata creation module utilizes a structure including the proprietary opcode and its associated bytecode pattern.

6. A device for executing bytecodes which are dynamically optimized by the device as claimed in claim 4 or 5 comprising one or more execution modules that execute each of the proprietary opcodes showcasing behavior corresponding to the repetitive pattern of the bytecode.

7. A computer implemented system for dynamic optimization of bytecodes comprising:-
- a processor configured to: -
∘ identify at least one repetitive pattern in the bytecode;
∘ define a proprietary opcode for each identified repetitive pattern;
∘ create metadata for executing each proprietary opcode;
∘ optimize said bytecode by replacing each identified repetitive pattern with the defined proprietary opcode; and
- a memory coupled to the processor to store determined metadata.

8. The computer implemented system as claimed in claim 7 wherein said metadata is structured to include said proprietary opcode and identified repetitive pattern of bytecode associated with said proprietary opcode.

9. A computer implemented system for executing byte code dynamically optimized by the computer implemented system of claim 7 or 8 comprising a processor configured to utilize said metadata to execute said bytecode.

10. A computer program product for dynamic optimization of bytecodes comprising:
- means to identify repetitive patterns in the bytecode;
- means to assign a unique proprietary opcode for each identified repetitive pattern and replacing said repetitive pattern with said proprietary opcode;
- means to create metadata necessary for defining execution of each proprietary opcode; and
- means to store said metadata for use during execution of said bytecode.

11. The computer program product as claimed in claim 10 wherein each metadata creation module utilizes a structure including the proprietary opcode and its associated bytecode pattern.

12. A computer program product for executing bytecodes which are dynamically optimized by the computer program product as claimed in claim 10 or 11 comprising one or more means to execute each of the proprietary opcodes showcasing behavior corresponding to the repetitive pattern of the bytecode.
